(19)

Europäisches
Patentamt
European
Patent Office
Office européen
des brevets

(11) **EP 1 437 496 B1**

(12) **EUROPEAN PATENT SPECIFICATION**

(45) Date of publication and mention
of the grant of the patent:
**20.06.2007 Bulletin 2007/25**

(51) Int Cl.:
*F02D 19/02* (2006.01)    *F02D 11/10* (2006.01)
*F02D 35/00* (2006.01)    *F02D 31/00* (2006.01)

(21) Application number: **04000238.8**

(22) Date of filing: **08.01.2004**

(54) **Gas engine driving apparatus**

Gasangetriebenes Motorsteuerungsgerät

Appareil de commande de moteur à gas

(84) Designated Contracting States:
**DE ES FR GB IT PT**

(30) Priority: **09.01.2003 JP 2003002829**

(43) Date of publication of application:
**14.07.2004 Bulletin 2004/29**

(73) Proprietors:
• **SANYO ELECTRIC CO., LTD.**
**Moriguchi-shi, Osaka 570 (JP)**
• **Sanyo Electric Air Conditioning Co., Ltd.**
**Ashikaga-shi,**
**Tochigi-ken (JP)**

(72) Inventor: **Nakajima, Katsunori**
**Ora-gun**
**Gunma (JP)**

(74) Representative: **Glawe, Delfs, Moll**
**Patentanwälte**
**Postfach 26 01 62**
**80058 München (DE)**

(56) References cited:
**DE-A1- 19 833 839      US-A- 4 742 462**
**US-A- 5 222 022**

• **PATENT ABSTRACTS OF JAPAN vol. 008, no. 244 (M-337), 9 November 1984 (1984-11-09) & JP 59 120740 A (TOYOTA JIDOSHA KK), 12 July 1984 (1984-07-12)**
• **PATENT ABSTRACTS OF JAPAN vol. 009, no. 139 (M-387), 14 June 1985 (1985-06-14) & JP 60 019934 A (TOYOTA JIDOSHA KK), 1 February 1985 (1985-02-01)**

**Description**

BACKGROUND OF THE INVENTION

1. Field of the Invention

The present invention relates to an engine driving apparatus for an air conditioner, power generating equipment or the like which is driven by an engine.

2. Description of the Related Art

A gas heat pump type air conditioner in which a compressor is driven by a gas engine is known as a typical one of air conditioners each of which is driven by an engine. According to this gas heat pump type air conditioner, fuel gas supplied from a fuel supply device and air supplied from an air supply device are mixed in a throttle portion to form air-fuel mixture and then the air-fuel mixture thus formed is fed to a gas engine. The fuel supply device is equipped with a fuel supply pipe through which fuel is supplied, and a fuel adjusting valve disposed at some midpoint in the fuel supply pipe. The fuel adjusting valve is constructed by an electric motor-driven type flow rate control valve which comprises a valve plug and a stepping motor. It adjusts the valve opening degree of the valve port thereof to adjust (vary) the supply amount of the fuel gas, thereby adjusting the air-fuel ratio of the air-fuel mixture to the optimum value (see JP-A-8-219561, for example).

In the fuel supply device disclosed in the above publication, the fuel supply pipe is branched into two branch passages (first and second passages) at some midpoint thereof in connection with the type of fuel gas (for example, propane gas, city gas 13A, etc.). In this case, a fuel adjusting valve comprising an electric motor-driven type flow rate control valve is equipped in the first passage, and a nozzle or orifice is equipped in the second passage.

According to another type fuel supply device, the fuel supply pipe is branched into three passages at some midpoint thereof. In this case, a fuel adjusting valve comprising an electric motor-driven type flow rate control valve is equipped in a first passage, a nozzle or orifice is equipped in a second passage, and an electric motor-driven type opening/closing valve and a nozzle or orifice which are connected to each other in series are equipped in a third passage.

Gas importing countries such as Japan, etc. import natural gas as fuel gas from various other countries, districts, etc. in the world, and properties of the natural gas thus imported are slightly different among producing counties, districts, etc. Therefore, in order to suppress the dispersion in heat value of the natural gas due to the difference in the properties of the natural gas, gas supply companies in these countries carry out quality-adjustment (quality governing) on the natural gas thus imported, and supply the natural gas as city gas to the market. In general, the city gas being mainly distributed in Japan has a heat value of $46MJ/Nm^3$. However, it is expected that the gas supply business will be deregulated in the near future, and when the gas supply business is actually deregulated, there may be considered such a case that fuel gas is directly supplied as city gas to the market without adjusting the heat value thereof. In this case, there will occur such a risk that the city gas to be supplied to the market is slightly varied in heat value due to the difference in producing country (district) of natural gas or the season in which gas is used. At present, it is estimated that the heat value will vary in the range from about 43 to $46MJ/Nm^3$.

When non-adjusted heat-value gas which is varied in heat value in the above range (hereinafter referred to as "non-adjusted gas") is supplied to the market, the air-fuel ratio of air-fuel mixture to be supplied to an engine may be varied in accordance with the district or season in which the gas is used. In this case, there may occur such a case that it is difficult to normally drive the engine.

SUMMARY OF THE INVENTION

The present invention has been implemented in view of the foregoing situation, and has an object to provide an engine driving apparatus that enables an engine to drive excellently with simplifying the construction of a fuel supply passage even when non-adjusted gas is used as fuel gas. An example of such an apparatus is shown for instance in JP 59120740

In order to attain the above object, according to a first aspect of the present invention, a gas engine driving apparatus comprising a gas engine (30), a rotation number detecting unit (72) for detecting the rotation number of the gas engine (30), a fuel supply pipe (32) which is connected to a throttle portion (36) for supplying air-fuel mixture comprising air and fuel gas to the gas engine (30) at the downstream side thereof, a fuel adjusting valve (35) which is equipped at some midpoint in the fuel supply pipe (32) and whose valve opening degree is variable, a target opening degree setting unit (59, 60) for setting the target opening degree of the fuel adjusting valve (35), and a controller (13) for controlling the valve opening degree of the fuel adjusting valve so that the target opening degree set by the target opening degree setting unit is achieved, is characterized in that the controller (13) is equipped with a target opening degree correcting unit (75) for calculating a rotation number variation average value on the basis of rotation number data detected by the rotation number detecting unit (72) after the gas engine (30) is started, and correcting the target opening degree of the fuel adjusting valve (35) on the basis of the calculation result.

According to a second aspect of the present invention, in the gas engine driving apparatus of the first aspect, the target opening degree correcting unit (75) increases the target opening degree of the fuel adjusting valve (35) when the rotation number variation average value continue to keep a predetermined first set value or more for a first predetermined time, and also reduces the target opening degree of the fuel adjusting valve when the rotation number variation average value continues to keep a predetermined second set value or less for a predetermined time.

According to a third aspect of the present invention, in the gas engine driving apparatus of the first aspect, the fuel adjusting valve (35) has a valve port through which the fuel gas is passed, the bore of the valve port being set to about 4 to 6mm.

According to a fourth aspect of the present invention, in the gas engine driving apparatus of the first aspect, the gas engine is used to drive any one of a compressor of a refrigerating circuit of an air conditioner and a power generator of a power generating apparatus.

According to a fifth aspect of the present invention, in the gas engine driving apparatus of the first aspect, the controller (13) is further equipped with a storage portion (61) for storing control data associated with the control of the fuel adjusting valve (35) in accordance with the type of the fuel gas to be used.

According to a sixth aspect of the present invention, in the gas engine driving apparatus of the fifth aspect, the control data contains data on the target opening degree and valve opening/closing speed of the fuel adjusting valve.

BRIEF DESCRIPTION OF THE DRAWINGS

Fig. 1 is a systematic diagram of an air conditioner including an embodiment of an engine driving apparatus according to the present invention;
Fig. 2 is a block diagram showing the main part of the engine driving apparatus;
Fig. 3 is a diagram showing a fuel adjusting valve;
Fig. 4 is a flowchart showing the operation of a controller when an engine is started; and
Fig. 5 is a flowchart showing the operation of the controller after the engine is started.

DETAILED DESCRIPTION OF THE PREFERRED EMBODIMENT

A preferred embodiment according to the present invention will be described hereunder with reference to the accompanying drawings.

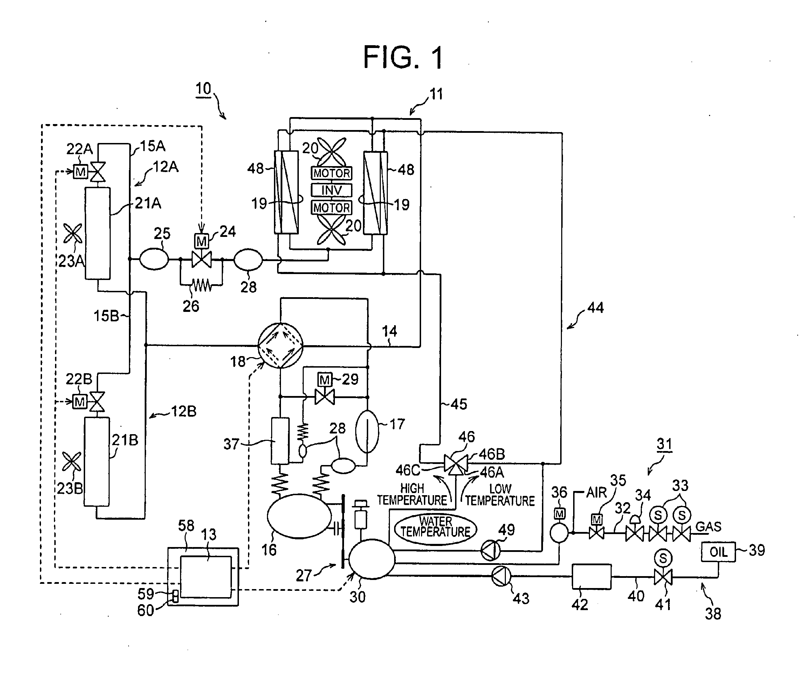

An embodiment of the present invention will be described with reference to Figs. 1 to 5. In the following description, the present invention is applied to a heat pump type air conditioner. However, the air conditioner to which the present invention is applied is not limited to the heat pump type air conditioner, but may be applied to various other types of air conditioners. Furthermore, the present invention may be applied to not only the air conditioners, but also other equipment such as power generating equipment, etc. insofar as they are driven by an engine.

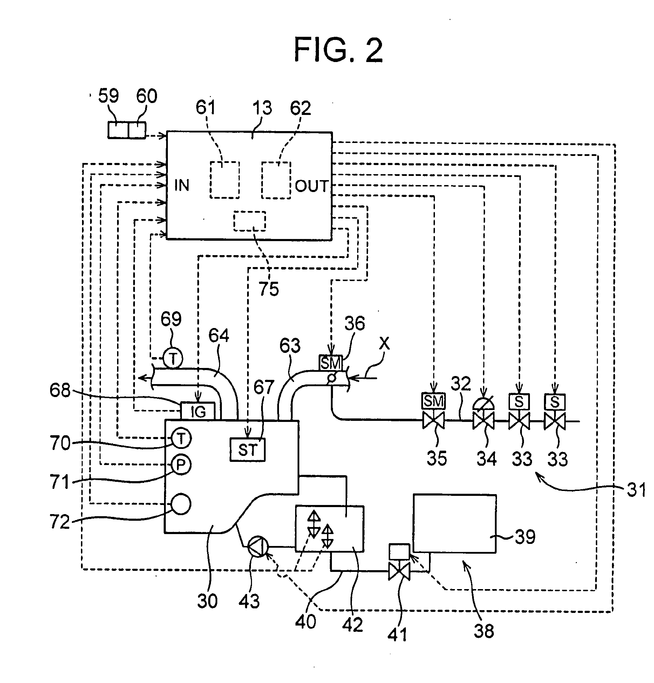

In Figs. 1 and 2, a heat pump type air conditioner 10 according to this embodiment includes an outdoor unit 11, plural (for example, two) indoor units 12A and 12B, a controller 13 such as a microcomputer or the like, etc., and an outdoor refrigerant pipe 14 of the outdoor unit 11 is linked to each of indoor refrigerant pipes 15A, 15B of the indoor units 12A, 12B.

The outdoor unit 11 is mainly disposed outdoors. The outdoor unit 11 includes a compressor 16, an accumulator 17 disposed at the suction side of the compressor 16 and a four-way valve 18 disposed at the discharge side of the compressor 16 which are equipped to be connected to one another along the outdoor heat pipe 14. The outdoor unit 11 further includes an outdoor heat exchanger 19, an outdoor expansion valve 24 and a dry core 25 which are connected to the four-way valve 18 in this order.

An outdoor fan 20 for blowing air to the outdoor heat exchanger 20 is disposed so as to be adjacent to the outdoor heat exchanger 19. The compressor 16 is linked to a gas engine 30 through a flexible coupling 27 such as a belt, pulley or the like, and driven by the gas engine 30. A bypass pipe 26 is equipped so as to bypass the outdoor expansion valve 24.

Each of the indoor units 12A, 12B are disposed indoors, and includes an indoor heat exchanger 21A, 21B and an indoor expansion valve 22A, 22B adjacent to the indoor heat exchanger 21A, 21B, which are disposed in the indoor refrigerant pipe 15A, 15B. Furthermore, an indoor fan 23A, 23B for blowing air to the indoor heat exchanger 21A, 21B is disposed so as to be adjacent to the indoor heat exchanger 21A, 21B.

In Fig. 1, reference numeral 28 represents a strainer, reference numeral 29 represents a relief valve for letting out refrigerant pressure at the discharge side of the compressor 16 to the suction side of the compressor 16, and reference numeral 37 represents an oil separator.

The controller 13 is disposed in the outdoor unit 11, and controls the driving of each of the outdoor unit 11 and the indoor units 12A, 12B. Specifically, the controller 13 controls each of the gas engine 30 (that is, the compressor 16), the four-way valve 18, the outdoor fan 20 and the outdoor expansion valve 24 in the outdoor unit 11 and the indoor expansion valves 22a, 22B and the indoor fans 23A, 23B in the indoor units 12A, 12B. Furthermore, the controller 13 controls a circulating pump 49 of an engine cooling device 44.

The heat pump type air conditioner 10 is set to cooling operation or heating operation by switching the four-way valve 18 through the controller 13. That is, when the controller 13 switches the four-way valve 18 to the cooling side, the refrigerant flows as indicated by a solid-line arrow, and the outdoor heat exchanger 19 is set to serve as a condenser while the indoor heat exchangers 21A, 21B are set to serve as evaporators, thereby setting the air conditioner to the cooling operation state. Therefore, the indoor heat exchangers 21A, 21B cool rooms.

On the other hand, when the controller 13 switches the four-way valve to the heating side, the refrigerant flows as indicated by a broken-line arrow, and the indoor heat exchangers 21A, 21B are set to serve as condensers while the outdoor heat exchanger 19 is set to serve as an evaporator, thereby setting the air conditioner to the heating operation state. Therefore, the indoor heat exchangers 21A, 21B heat the rooms.

Under cooling operation, the controller 13 controls the valve opening degree of each of the indoor expansion valves 22A, 22B in accordance with the air-conditioning load. On the other hand, under heating operation, the controller. 13 controls the valve opening degree of each of the outdoor expansion valve 24 and the indoor expansion valves 22A, 22B in accordance with the air-conditioning load.

The combustion chamber (not shown) of the gas engine 30 for driving the compressor 16 is supplied with air-fuel mixture including fuel gas fed from a fuel supply device 31 and air fed from an air supply passage. The fuel supply device 31 is equipped with a fuel supply pipe 32, and also two fuel shut-off valves 33, a zero governor 34, a fuel adjusting valve 35 and a throttle portion 36 which are successively disposed in this order from the upstream side in the fuel supply pipe 32. The end portion of the fuel supply pipe 32 at the downstream side is connected to the throttle portion 36.

The fuel shut-off are connected to each other in series to form a double closing type fuel shut-off valve mechanism. The two fuel shut-off valves 33 are fully closed or opened interlockinglywith each other so that one of a perfect shut-off operation having no leakage of fuel gas and a fuel intercommunicating operation (a perfect fuel-gas passing operation) is selectively carried out.

The zero governor 34 adjusts the fuel gas pressure at the secondary side (the secondary pressure after the zero governor 34 in the fuel supply pipe 32) to predetermined fixed pressure by varying the fuel gas pressure at the primary side (the primary pressure before the zero governor 34 in the fuel supply pipe 32), thereby stabilizing the driving of the gas engine 30.

The fuel adjusting valve 35 adjusts the air-fuel ratio of the air-fuel mixture which is generated by introducing air from an air suction path X at the upstream side of the throttle portion 36. Furthermore, the throttle portion 36 adjusts the supply amount of the air-fuel mixture supplied to the combustion chamber of the gas engine 30 to control the rotation number of the gas engine 30 variably.

An engine oil supply device 38 is connected to the gas engine 30, and equipped with an oil shut-off valve 41, a sub oil pan 42 and an oil supply pump 43 which are successively disposed in an oil supply pipe 40 connected to an oil tank 39 at one end thereof, and engine oil is properly supplied to an oil pan (not shown) of the gas engine 30 through the sub oil pan 43 and the oil supply pump 43 in the oil supply pipe 40.

The control of the gas engine 30 by the controller 13 is specifically performed by controlling the fuel shut-off valves 33, the zero governor 34, the fuel adjusting valve 35 and the throttle portion 36 of the engine fuel supply device 31 and the oil shut-off valve 41 and the oil supply pump 43 of the oil supply device 38 through the controller 13.

The gas engine 30 is cooled by engine cooling water circulated in the engine cooling device 44. The engine cooling device 44 includes a wax three-way valve 46, a radiator 48 and a circulating pump 49 which are successively disposed in a substantially closed loop type water pipe 45 having one end connected to the gas engine 30 through an exhaust gas heat exchanger (not shown) equipped to the gas engine 30 and the other end directly connected to the gas engine 30.

The circulating pump 49 increases the pressure of the engine cooling water to circulate the engine cooling water in the cooling water pipe 45 when it is actuated. The wax three-way valve 46 is used to quickly heat the gas engine 30, and it has an inlet port 46A connected to the gas engine 30 in the cooling water pipe 45, a low-temperature side outlet port 46B connected to the suction side of the circulating pump 49 in the cooling water pipe 45 and also a high-temperature side outlet port 46C connected to the radiator 48 side in the cooling water pipe 45.

The engine cooling water of about 40°C flows from the discharge side of the circulating pump 49 into the exhaust gas heat exchanger (not shown) of the gas engine 30, withdraws exhaust heat (the heat of exhaust gas) of the gas engine 30 and then flows into the gas engine 30 to cool the gas engine 30. The engine cooling water is heated to about 80°C through the cooling of the gas engine 30.

The engine cooling water flowing from the gas engine 30 to the wax three-way valve 46 is returned form the low-temperature side outlet port 46B to the circulating pump 49 when the temperature is low (for example, less than 80°C), and quickly heats the gas engine 30. On the other hand, when the temperature of the engine cooling water is high (for example, not less than 80°C), it flows from the high-temperature side outlet port 46C to the radiator 48.

The radiator 48 radiates the heat of the engine cooling water to cool the engine cooling water to about 40°C. The engine cooling water thus cooled by the radiator 48 is passed through the suction side of the circulating pump 49, and then returned to the exhaust gas heat exchanger (not shown) of the gas engine 30 to cool the gas engine 30. The radiator 48 is located at the upstream side of the outdoor heat exchanger in the air blowing direction in the outdoor unit 11, and also adjacent to the outdoor heat exchanger 19.

Under cooling or heating operation of the indoor unit 12a, 12B, the circulating pump 49 of the engine cooling device 44 is actuated, so that the engine cooling water is circulated to cool the gas engine 30. The engine cooling water which has cooled the gas engine 30 is subjected to heat radiation by the radiator 48 to be cooled. Particularly, when the indoor unit 12A, 12B is set to heating operation, the heat radiated by the radiator 48 is taken into the outdoor heat exchanger 19 functioning as an evaporator, and it is used as a heat source for the evaporator.

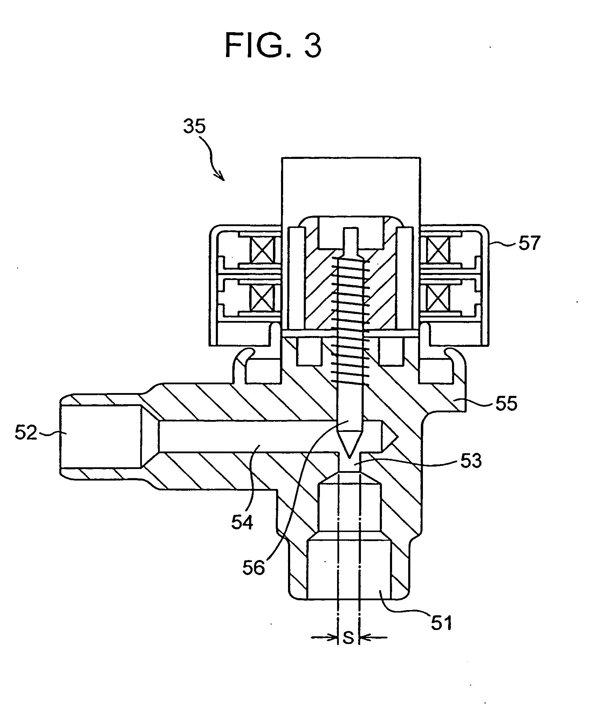

As shown in Fig. 3, the fuel adjusting valve 35 of the fuel supply device 31 has an inlet port 51 and an outlet port 52, and it is constructed by an electric motor-driven type flow rate control valve comprising a valve body 55 having an internal flow passage 54 equipped with a valve port at some midpoint thereof, a valve plug 56 for variably adjusting the opening degree (valve opening degree) of the valve port 53, and a stepping motor 57 for driving the valve plug 56 so that the valve plug 56 is rotated in the forward and backward directions, etc. The bore S of the valve port 53 whose valve opening degree is varied by the valve plug 56 is set to about 4.0 to 6.0mm (about 5.0mm in this embodiment).

The fuel gas which has been passed through the zero governor 34 while the pressure thereof is adjusted to substantially the atmospheric pressure flows from the inlet port 51 of the valve body 55 into the internal flow passage 54, and the flow rate thereof is adjusted when it passes through the valve port 53 whose opening degree is adjusted by the valve plug 56. The fuel gas whose flow rate has been adjusted as described above passes through the outlet port 52 and then flows into the throttle portion 36.

Here, as shown in Figs. 1 and 2, an electric equipment board 58 having the controller 13 mounted therein (which is accommodated in an external packaging unit (not shown) of the outdoor unit 11) is equipped with plural setting switches (target opening degree setting unit) 59, 60 for setting a target opening degree of the fuel adjusting valve 35 in accordance with the type of fuel gas in use, such as propane of about 24000kcal/$m^3$ in heating value, city gas 13A of about 11000kcal/$M^3$ (about 46MJ/$Nm^3$) in heating value or the like, and the operation signals of the setting switches 59, 60 are input to the controller 13.

The controller 13 is equipped with a storage portion 61, an operation speed changing portion 62, a target opening degree correcting portion 75, etc. In the storage portion 61 are stored plural kinds of control data which are individually used to control the valve opening degree of the fuel adjusting valve or the like in accordance with the type of fuel gas being used. For example, plural kinds of control data on the specifications for propane gas, natural gas 13A, etc.

As an example of the control data stored in the storage portion 61, in the case of propane gas having a heat value of about 24000kcal/$m^3$, the target valve opening degree of the fuel adjusting valve 35 is set to 100 steps, and in the case of city gas 13A having a heat value of about 11000kcal/$m^3$ (46MJ/$Nm^3$), the target valve opening degree of the fuel adjusting valve 35 is set to 200 steps.

Furthermore, as another example of the control data stored in the storage portion 61, in the case of propane, the valve opening/closing speed (operating speed) of the fuel adjusting valve 35 is set to 1 step/1 sec, and in the case of city gas 13A, the valve opening/closing speed (operating speed) of the fuel adjusting valve 35 is set to 3 steps/1 sec. The plural kinds of control data in the storage portion 61 are selectively set in conformity with the type of fuel gas being used by the operation of the plural setting switches 59, 60.

The operation speed changing portion 62 changes the valve opening/closing speed of the fuel adjusting valve 35 in accordance with the target opening degree set by the setting switches 59, 60. Furthermore, the target opening degree correcting portion 75 corrects the target opening degree of the fuel adjusting valve 35 on the basis of the calculation result of a rotation number variation average value Frpm (described later) calculated by an operating portion of the controller 13 immediately after the start of the gas engine 30 is completed.

That is, the controller 13 calculates the rotation number variation average value Frpm on the basis of the engine rotation number data detected by a rotation number detector (rotation number detecting unit) 72 for detecting the rotation number of the gas engine 30. When the rotation number variation average value Frpm thus calculated continues to keep a predetermined first set value (for example, 5) or more for a predetermined time (for example, about 20 seconds), the target opening degree correcting portion 7 corrects the target opening degree of the fuel adjusting valve 35 so that the target opening degree is increased by 2 steps (i.e., + 2 steps). Thereafter, when the rotation number variation average value Frpm continues to keep a predetermined second set value (for example, 4) or less for a second predetermined time (for example, about 10 hours), the target opening degree correcting portion 75 corrects the target opening degree of the fuel adjusting valve 35 so that the target opening degree is reduced by 1 step (i.e., -1 step).

Next, the rotation number variation average value Frpm is calculated as follows. During complete explosion in the gas engine 25, for example, 30 data samples of actual rotation number Ni (i=1 to 30) are taken in and an i-th moving average rotational number Mni is calculated from the following equation (1):

$$Mni = \sum_{j=i-5}^{i+5} (Nj/11)$$

$$(i = 6 \text{ to } 25) \quad \cdots (1)$$

The absolute value of the difference between the moving average rotation number Mni and the actual rotation number Ni is calculated as Dni from the equation (2)

$$Dni = |Mni - Ni| \quad (i=6 \text{ to } 25) \quad \cdots (2)$$

For example, after twenty samples of Dni are calculated, the arithmetic average thereof is calculated and Tdni is calculated from the equation (3).

$$Tdni = \sum_{i=6}^{25} (|Mnj - Nj|/20)$$

$$\cdots (3)$$

For example, after ten samples of Tdni are calculated, the average value thereof is calculated by using the equation (4), and the average value thus calculated is set as a rotation number variation average value Frpm.

$$Frpm = \sum_{j=1}^{10} (Tdnj/10)$$

$$\cdots (4)$$

In Fig. 2, reference numeral 63 represents an air intake pipe which is connected to the throttle portion 36 at one end side thereof and to the gas engine 30 at the other end side, reference numeral 64 represents an exhaust pipe, reference numeral 67 represents a starter, reference numeral 68 represents an ignition coil, reference numeral 69 represents an exhaust gas temperature sensor for detecting the temperature of the exhaust gas, reference numeral 70 represents a water temperature sensor for detecting the temperature of the cooling water in the gas engine 30, and reference numeral 71 represents a hydraulic switch.

The starter 67 and the ignition coil 68 are connected to the output side of the controller 13. The exhaust gas temperature sensor 69, the water temperature sensor 70, the hydraulic switch 71, the rotation number detector 72, etc. are connected to the input side of the controller 13.

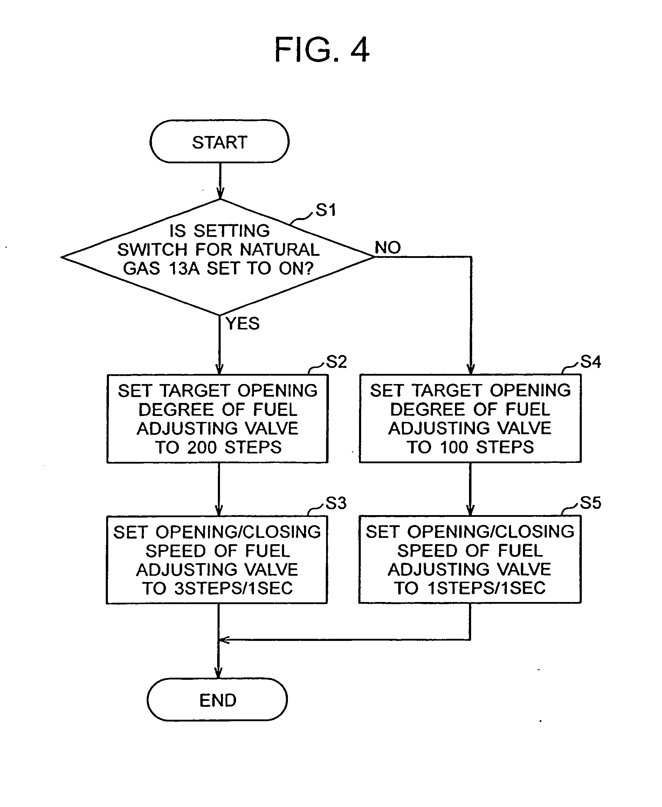

Next, the operation of the fuel supply device 31 will be described with reference to Fig. 4.

First, when natural gas 13A is used as fuel gas, the setting switch 59 for the natural gas 13A is set to ON when the outdoor unit 11 is set up. When power is turned on under the above state, the controller 13 judges whether the setting switch 59 for the natural gas 13A is set to ON or not (S1) as shown in the flowchart of Fig. 4. If it is judged that the setting switch 59 is set to ON (S1 : YES ), the target valve opening degree of the fuel adjusting valve 35 is set to 200 steps on the basis of the control data stored in the storage portion 61 (S2), the stepping motor 57 of the fuel adjusting valve 35 is forwardly rotated, and the valve plug 56 is driven in the valve opening direction at an opening/closing speed of 3 steps/ 1 sec (S3). That is, the valve plug 56 is driven so as to be separated from the valve port 53 so that the valve port 53 is greatly opened. Under this state, the stepping motor 57 is stopped as shown in Fig. 3.

On the other hand, if it is judged that the setting switch 59 is set to OFF (S1:N0), that is, if the setting switch 60 for propane is set to ON when power is turned on, the controller 13 judges that the setting switch 60 for the propane is set to ON. In this case, the target valve opening degree of the fuel adjusting valve 35 is set to 100 steps on the basis of the control data stored in the storage portion 61 (S4), and the stepping motor 57 of the fuel adjusting valve 35 is forwardly rotated to drive the valve plug 56 in the valve opening direction at an opening/closing speed of 1 step/1 sec (S5). That is, the valve plug 56 is driven so as to be separate from the valve port 53 so that the opening degree of the valve port 53 is set to be smaller than that in the case of the specification for natural gas 13A as shown in Fig. 3. Under this state, the stepping motor 57 is stopped.

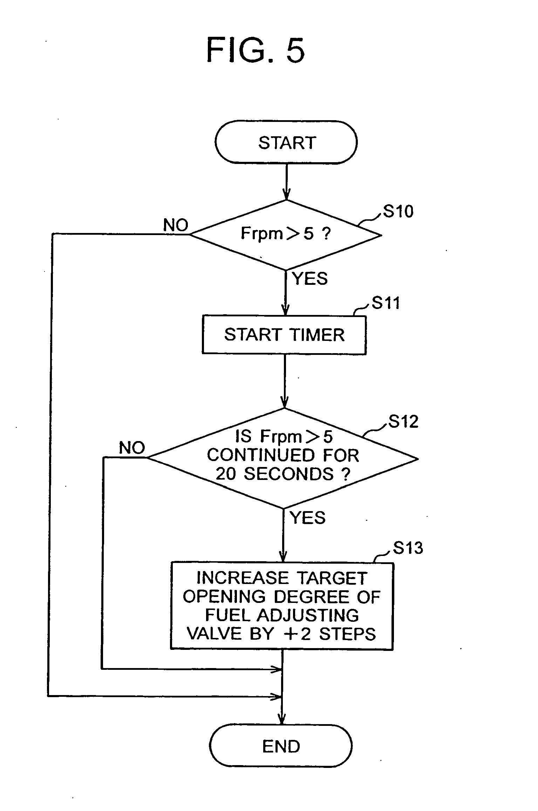

Under the above state, the controller 13 starts the gas engine 30, and starts the calculation of the rotation number variation average value Frpm from the above equations at the time point when the rotation number of the engine is stabilized after the engine is started (at the time point when about 5 to 10 seconds elapse from the start-completion time of the engine). As shown in the flowchart of Fig. 5, when the rotation number variation average value Frpm thus calculated is larger than a predetermined first set value (for example, 5) (S10), a timer portion of the controller 13 starts time-counting (S11) to count a predetermined first time (for example, about 20 seconds). When the rotation number variation average value continues to keep a value higher than the first set value (Frpm > 5) for the predetermined first time (about 20 seconds) (S12 in Fig. 5), the target opening degree correcting portion 75 corrects the target opening degree of the fuel adjusting valve 35 so that the target opening degree is increased by 2 steps (i.e., +2 steps)(S13), and then the controller 13 executes a normal operation for adjusting the throttle portion 36 and the opening degree of the fuel adjusting valve 35 in accordance with the air-conditioning load.

The increasing correction of the target opening degree of the fuel adjusting valve 35 described above is executed on the assumption that the fuel gas supplied to the gas engine 30 is judged as non-adjusted gas having a smaller heat value than quality-adjusted natural gas 13A.

Subsequently, when the rotation number variation average value Frpm described above continues to keep a value less than a second set value (for example, 4) (i.e., Frpm < 4) for a second predetermined time (for example, about 10 hours) from the start of the normal operation during the execution of the normal operation under the state that the target opening degree of the fuel adjusting valve 35 is increased by 2 steps (i.e., +2 steps), the target opening degree correcting portion 75 corrects the target opening degree of the fuel adjusting valve 35 so that the target opening degree is reduced by 1 step (i.e. -1 step).

This reducing correction is carried out when the engine rotation number of the gas engine 30 does not reach the target rotation number within the second predetermined time, that is, when the present condition of the engine does not reach such a condition that the engine is judged to have no extra output power, so that a problem caused by the increasing correction of the target opening degree (for example, if the target opening degree of the fuel adjusting valve 35 is excessively large, the amount of NOx in the exhaust gas is increased) can be prevented.

Under the engine control based on the control data of the specification for natural gas 13A, when the air-fuel ratio is increased due to reduction in heat value of fuel gas supplied to the gas engine 30, the rotation number variation average value Frpm trends to increase. In this case, it is necessary to adjust the target opening degree of the fuel adjusting valve 35 so that the rotation number variation average value Frpm does not exceed a predetermined range. That is, the controller 13 judges that the heat value of the fuel gas is reduced when the rotation number variation average value Frpm is equal to a value higher than a predetermined first reference value (for example, 8), and the target opening degree correcting portion 75 corrects the target opening degree of the fuel adjusting valve 35 so that the target opening degree is increased by 2 steps (i.e., +2 steps). Furthermore, when the rotation number variation average value Frpm continues to keep a value less than a second reference value (for example, 7) for a second predetermined time (for example, about 10 hours) from the start of the normal operation during the execution of the normal operation under the state that the target opening degree of the fuel adjusting valve 35 is increased by 2 steps (+2 steps), the target opening degree correcting portion 75 corrects the target opening degree of the fuel adjusting valve 35 so that the target opening degree is reduced by 1 step (-1 step). The correction of the target opening degree described above is an example in which the heat value of the fuel gas supplied to the gas engine 30 is easily judged on the basis of the rotation number variation average value Frpm by the controller 13, and the target opening degree of the fuel adjusting valve 35 is adjusted on the basis of the above judgment result by the target opening degree correcting portion 75.

As described above, the present invention includes the gas engine 30, the rotation number detector (rotation number detecting unit 72 for detecting the rotation number of the gas engine 30, the fuel supply pipe 32 whose downstream side is connected to the throttle portion 36 for supplying air-fuel mixture of air and fuel gas to the gas engine 30, the fuel adjusting valve 35 which is equipped at some midpoint of the fuel supply pipe 32 so that the opening degree thereof is variable, the plural setting switches (target opening degree setting units) 59, 60 for setting the target opening degree of the fuel adjusting valve 35, and the controller 13 for controlling the valve opening degree of the fuel adjusting valve 35 so that the target opening degree set by the setting switches is achieved.

The controller 13 is equipped with the target opening degree correcting portion (target opening degree correcting unit) 75 for starting the calculation of the rotation number variation average value Frpm on the basis of the rotation number data detected by the rotation number detector 72 immediately after the start of the engine has been completed, and correcting the target opening degree of the fuel adjusting valve 36 on the basis of the calculation result. Therefore, it is unnecessary to branch the fuel supply pipe 32 into plural branch passages at some midpoint thereof and also it is unnecessary to equip an adjustment member such as a nozzle, an orifice or the like in accordance with the type of fuel gas being used. Accordingly, the number of parts can be reduced, and the construction of the fuel supply passage can be simplified. In addition, since the target opening degree correcting portion 75 corrects the target opening degree of the fuel adjusting valve 36 on the basis of the rotation number varying average value Frpm, the normal operation of the gas engine 30 can be performed even when there occurs a situation that non-adjusted gas is supplied as fuel gas to the gas engine 30, and thus the present invention can also adapt itself to non-adjusted gas in connection with the deregulation of the gas business, etc.

Furthermore, the target opening degree correcting portion 75 corrects the target opening degree of the fuel adjusting valve 35 so that the target opening degree is increased by 2 steps (i.e., +2 steps) when the rotation number variation average value Frpm continues to keep the predetermined first set value (for example, 5) or more for the first predetermined time (for example, about 20 seconds). Thereafter, when the rotation number variation average value Frpm continues to keep the second set value (for example, 4) or less for the second predetermined time (for example, about 10 hours) the target opening degree correcting portion 75 corrects the target opening degree of the fuel adjusting valve 35 so that the target opening degree is reduced by 1 step (i.e., -1 step). For example, even when the gas engine 30 is supplied with non-adjusted natural gas having a heat value different from city gas 13A having a heat value of about 11000kcal/m$^3$ (about 46MJ/Nm$^3$), variation in air-fuel ratio and insufficiency of output (power) can be suppressed, so that stable and excellent engine control can be performed.

Still furthermore, the fuel adjusting valve 35 has the valve port 53 whose bore S is set to about 4 to 6mm, so that the supply amount of the fuel gas can be prevented from being short without branching the fuel supply pipe 32 into plural passages at some midpoint thereof.

The present invention is not limited to the above-described embodiment, and various modifications may be made without departing from the scope of claims. For example, in the above embodiment, the two setting switches 59, 60 are equipped in connection with the two kinds of fuel gas (natural gas 13A and propane gas), however, only one of the two setting switches may be equipped. Furthermore, three to six setting switches may be equipped in accordance with the type of fuel gas. In this case, the control data of the fuel adjusting valve 35 may be stored in the storage portion 61 of the controller 13 in conformity with the setup number of the setting switches. Furthermore, in the above-described embodiment, the present invention is applied to the air conditioner. However, the present invention is applicable to not only the air conditioner, but also an engine driving device such as an engine-driving type power generating apparatus for driving a power generator by the gas engine 30.

According to the present invention, the gas engine driving apparatus comprises the gas engine, the rotation number detecting unit for detecting the rotation number of the gas engine, the fuel supply pipe which is connected to the throttle portion for supplying the air-fuel mixture of air and fuel gas to the gas engine at the downstream side thereof, the fuel adjusting valve which is equipped at some midpoint in the fuel supply pipe and whose valve opening degree is variable, the target opening degree setting unit for setting the target opening degree of the fuel adjusting valve, and the controller for controlling the valve opening degree of the fuel adjusting valve so that the target opening degree set by the target opening degree setting unit is achieved. The controller is equipped with the target opening degree correcting unit for calculating the rotation number variation average value on the basis of the rotation number data detected by the rotation number detecting unit after the engine is started, and correcting the target opening degree of the fuel adjusting valve on the basis of the calculation result. Therefore, it is unnecessary to equip an adjusting member such as a nozzle, an orifice or the like in conformity with the type of the fuel gas, so that the number of parts can be reduced. Furthermore, the normal operation of the engine can be also performed even when there occurs such a situation that non-adjusted gas is supplied as fuel gas to the gas engine while the construction of the fuel supplypassage is simplified, and thus the gas engine driving apparatus of the present invention can adapt itself to non-adjusted gas.

## Claims

1.  A gas engine driving apparatus comprising a gas engine (30) , a rotation number detecting unit (72) for detecting the rotation number of the gas engine (30), a fuel supply pipe (32) which is connected to a throttle portion (36) for supplying air-fuel mixture comprising air and fuel gas to the gas engine (30) at the downstream side thereof, a fuel adjusting valve (35) which is equipped at some midpoint in the fuel supply pipe (32) and whose valve opening degree is variable, a target opening degree setting unit (59, 60) for setting the target opening degree of the fuel adjusting valve (35), and a controller (13) for controlling the valve opening degree of the fuel adjusting valve so that the target opening degree set by the target opening degree setting unit is achieved, **characterized in that** the controller (13) is equipped with a target opening degree correcting unit (75) for calculating a rotation number variation average value on the basis of rotation number data detected by the rotation number detecting unit (72) after the gas engine (30) is started, and correcting the target opening degree of the fuel adjusting valve (35) on the basis of the calculation result.

2. The gas engine driving apparatus according to claim 1, wherein the target opening degree correcting unit (75) increases the target opening degree of the fuel adjusting valve (35) when the rotation number variation average value continue to keep a predetermined first set value or more for a first predetermined time, and also reduces the target opening degree of the fuel adjusting valve when the rotation number variation average value continues to keep a predetermined second set value or less for a predetermined time.

3. The gas engine driving apparatus according to claim 1, wherein the fuel adjusting valve (35) has a valve port through which the fuel gas is passed, the bore of the valve port being set to about 4 to 6mm.

4. The gas engine driving apparatus according to claim 1, wherein the gas engine is used to drive any one of a compressor of a refrigerating circuit of an air conditioner and a power generator of a power generating apparatus.

5. The gas engine driving apparatus according to claim 1, wherein the controller (13) is further equipped with a storage portion (61) for storing control data associated with the control of the fuel adjusting valve (35) in accordance with the type of the fuel gas to be used.

6. The gas engine driving apparatus according to claim 5, wherein the control data contains data on the target opening degree and valve opening/closing speed of the fuel adjusting valve.


**Patentansprüche**

1. Gasmaschinen-Antriebsgerät mit einer Gasmaschine (30), einer DrehzahlErfassungseinheit (72) zur Erfassung der Drehzahl der Gasmaschine (30), einer Brennstoffzufuhrleitung (32), die mit einem Drosselbereich (36) verbunden ist, zum Zuführen einer Luft-Brennstoff-Mischung aus Luft und Brennstoffgas an die Gasmaschine (30) an ihrer stromab liegenden Seite, einem Brennstoffeinstellventil (35), das an einem Mittelpunkt in der Brennstoffzufuhrleitung (32) vorgesehen ist und dessen Ventilöffnungsgrad variabel ist, einer Zielöffnungsgrad-Einstelleinheit (59, 60) zum Einstellen des Zielöffnungsgrades des Brennstoffeinstellventils (35) und einem Controller (13) zum Steuern des Ventilöffnungsgrades des Brennstoffeinstellventils derart, dass der Zielöffnungsgrad, der durch die Zielöffnungsgradeinstelleinheit eingestellt wurde, erhalten wird, **dadurch gekennzeichnet, dass** der Controller (13) mit einer Zielöffnungsgrad-Korrektureinheit (75) versehen ist zum Berechnen eines Mittelwertes der Drehzahlvariation auf Grundlage von Drehzahldaten, die durch die Drehzahlerfassungseinheit (72) erfasst wurden, nachdem die Gasmaschine (30) gestartet wurde und zum Korrigieren des Zielöffnungsgrades des Brennstoffeinstellventils (35) auf Grundlage des Berechnungsergebnisses.

2. Gasmaschinen-Antriebsgerät nach Anspruch 1, wobei die Zielöffnungsgrad-Korrektureinheit (75) den Zielöffnungsgrad des Brennstoffeinstellventils (35) erhöht, wenn der Mittelwert der Drehzahländerung fortgesetzt für eine erste vorgegebene Zeit auf einem vorgegebenen ersten Einstellwert oder mehr verbleibt, und ferner den Zielöffnungsgrad des Brennstoffeinstellventils vermindert, wenn der Mittelwert der Drehzahländerung für eine vorgegebene Zeit auf einem zweiten Einstellwert oder weniger verbleibt.

3. Gasmaschinenantriebsgerät nach Anspruch 1, wobei das Brennstoffeinstellventil (35) eine Ventilöffnung aufweist, durch die Brennstoffgas hindurchtritt, wobei die Bohrung der Ventilöffnung auf etwa 4 bis 6 mm eingestellt ist.

4. Gasmaschinenantriebsgerät nach Anspruch 1, wobei die Gasmaschine verwendet wird, um einen Kompressor eines Kühlkreises einer Klimaanlage oder einen Leistungsgenerator eines Leistungsgeneratorgerätes anzutreiben.

5. Gasmaschinenantriebsgerät nach Anspruch 1, wobei der Controller (13) ferner mit einem Speicherbereich (61) ausgestattet ist zum Speichern von Steuerdaten, die der Steuerung des Brennstoffeinstellventils (35) zugeordnet sind, in Übereinstimmung mit der Art des Brennstoffgases, das zu verwenden ist.

6. Gasmaschinenantriebsgerät nach Anspruch 5, wobei die Steuerdaten Daten hinsichtlich des Zielöffnungsgrades und der Ventilöffnungs-/Verschlussgeschwindigkeit des Brennstoffeinstellventils enthalten.

**Revendications**

1. Appareil de commande de moteur à gaz comprenant un moteur à gaz (30), une unité de détection de vitesse de rotation (72) pour détecter la vitesse de rotation du moteur à gaz (30), un conduit de fourniture de combustible (32) qui est connecté à un élément d'étranglement (36) pour fournir un mélange air - combustible comprenant de l'air et un gaz combustible au moteur à gaz (30) sur son côté aval, une vanne de réglage de combustible (35) qui est prévue à un point intermédiaire dans le conduit de fourniture de combustible (32) et dont le degré d'ouverture de vanne est variable, une unité de réglage de degré d'ouverture de consigne (59, 60) pour fixer le degré d'ouverture de consigne de la vanne de réglage de combustible (35), et une unité de commande (13) pour régler le degré d'ouverture de vanne de la vanne de réglage de combustible de sorte que le degré d'ouverture de consigne établi par l'unité de réglage de degré d'ouverture de consigne soit obtenu, **caractérisé en ce que** l'unité de commande (13) est équipée d'une unité de correction de degré d'ouverture de consigne (75) pour calculer une valeur moyenne de variation de vitesse de rotation sur la base de données de vitesse de rotation détectées par l'unité de détection de vitesse de rotation (72) après le démarrage du moteur à gaz (30), et corriger le degré d'ouverture de consigne de la vanne de réglage de combustible (35) sur la base du résultat calculé.

2. Appareil de commande de moteur à gaz selon la revendication 1, dans lequel l'unité de correction de degré d'ouverture de consigne (75) accroît le degré d'ouverture de consigne de la vanne de réglage de combustible (35) lorsque la valeur moyenne de variation de la vitesse de rotation continue à conserver une première valeur de consigne prédéterminée ou plus, pendant un premier laps de temps prédéterminé, et réduit également le degré d'ouverture de consigne de la vanne de réglage de combustible lorsque la valeur moyenne de variation de la vitesse de rotation continue à conserver une deuxième valeur de consigne prédéterminée ou moins, pendant un laps de temps prédéterminé.

3. Appareil de commande de moteur à gaz selon la revendication 1, dans lequel la vanne de réglage de combustible (35) comporte un orifice de vanne à travers lequel passe le gaz combustible, le passage de l'orifice de vanne étant fixé à 4 à 6 mm environ.

4. Appareil de commande de moteur à gaz selon la revendication 1 dans lequel le moteur à gaz est utilisé pour entraîner un quelconque parmi un compresseur d'un circuit de réfrigération d'un climatiseur et d'un générateur d'énergie d'un appareil de génération d'énergie.

5. Appareil de commande de moteur à gaz selon la revendication 1 dans lequel l'unité de commande (13) est en outre équipée d'une mémoire (61) pour stocker des données de commande associées à la commande de la vanne de réglage de combustible (35) en fonction du type de gaz combustible à utiliser.

6. Appareil de commande de moteur à gaz selon la revendication 5, dans lequel les données de commande contiennent des données sur le degré d'ouverture de consigne et la vitesse d'ouverture / fermeture de la vanne de réglage de combustible.

# FIG. 1

FIG. 2

# FIG. 3

# FIG. 4

START

S1

IS SETTING SWITCH FOR NATURAL GAS 13A SET TO ON?

NO

YES

S2

SET TARGET OPENING DEGREE OF FUEL ADJUSTING VALVE TO 200 STEPS

S4

SET TARGET OPENING DEGREE OF FUEL ADJUSTING VALVE TO 100 STEPS

S3

SET OPENING/CLOSING SPEED OF FUEL ADJUSTING VALVE TO 3STEPS/1SEC

S5

SET OPENING/CLOSING SPEED OF FUEL ADJUSTING VALVE TO 1STEPS/1SEC

END

# FIG. 5

START

S10

Frpm > 5 ?

NO

YES

S11

START TIMER

S12

IS Frpm > 5 CONTINUED FOR 20 SECONDS ?

NO

YES

S13

INCREASE TARGET OPENING DEGREE OF FUEL ADJUSTING VALVE BY +2 STEPS

END

**EP 1 437 496 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8219561 A
- JP 59120740 B